# EUROPEAN PATENT SPECIFICATION

(11) **EP 4 372 327 B1**
(45) Date of publication and mention of the grant of the patent: **08.07.2026**
(21) Application number: 22208315.6
(22) Date of filing: 18.11.2022
(51) Int. Cl.: G01F 23/28, G01F 23/80

(54) **LEVEL MEASUREMENT SYSTEM WITH WIRELESS OPERATOR DEVICE**
FÜLLSTANDSMESSSYSTEM MIT DRAHTLOSER BEDIENERVORRICHTUNG
SYSTÈME DE MESURE DE NIVEAU AVEC DISPOSITIF D'OPÉRATEUR SANS FIL

(43) Date of publication of application: 22.05.2024
(73) Proprietor: Rosemount Tank Radar AB, 435 23 Mölnlycke (SE)
(72) Inventor: PREISIG, Nicolas, 444 95 ÖDSMÅL (SE); WIDAHL, Christoffer, 426 70 VÄSTRA FRÖLUNDA (SE)
(74) Representative: Kransell & Wennborg KB

(56) References cited:
- DE-A1- 102018 132 277
- DE-A1- 102020 134 382
- RU-C1- 2 749 560
- US-A1- 2021 256 837
- US-B2- 10 571 328

## Description

### Technical Field of the Invention

The present invention relates to a level measurement system and to a wireless operator device.

### Technical Background

There are various situations where it would be desirable to keep track of the status of each tank in a geographically distributed plurality of tanks. For example, a product availability service provider may have offered the service of ensuring that each tank in the geographically distributed plurality of tanks always contains a minimum amount of product. The product and the minimum amount may be specific to each particular tank.

To be able to conveniently provide this exemplary service, the product availability service provider may use an asset management system, which may keep a record for each tank indicating the product and the latest reported level of product in the tank. To keep the record for a given tank up to date, the asset management system may periodically receive an updated measured level of product in that tank from a level measurement system arranged to measure the level of product in that tank.

When the updated measured level of product in a tank indicates that the tank should soon be refilled, the asset management system may create a work order and provide that work order to an operator. The operator may then bring a mobile vessel (such as a tanker truck) with the relevant product to the location of the tank, and fill the tank with the correct product for that tank.

Since there may be several tanks, which may be more or less identical, at the location specified in the work order, there is a risk that the operator inadvertently fills the wrong tank with the product. This would result in the product availability service not being provided. Additionally, an overfill situation may occur in another tank, or there may even be a potentially harmful mix of different products.

It would be desirable to improve the ability to at least detect this kind of operator error.

DE 10 2020 134382 A1 relates to a device and a system for measuring precipitation.

DE 10 2018 132277 A1 relates to a self-sufficient level measuring device for determining a level of a mobile container, a mobile container with such a level measuring device and a system for determining a level of a mobile container.

US 2021/256837 A1 relates to a system for monitoring fuel level in a fuel tank including a wireless tank sensor unit and wireless receiver unit pairing. The wireless tank sensor unit is mountable to a fuel tank and interacts with the installed fuel level gauge assembly and operates to transmit fuel level data to the wireless receiver unit installable in a remote location in radio frequency (RF) range of the wireless tank sensor unit. The wireless receiver unit operates to process the received fuel level data and provide, responsive to fuel level data exceeding user-defined thresholds, notifications corresponding to actions to be taken corresponding to a refill event. In some embodiments, the system may further include a mobile application installable on a portable electronic device. The system may operate in an internet-connected mode or an internet-disconnected mode based on user preference and/or availability of an internet connection.

### Summary

In view of the above, a general object of the present invention is to improve the ability to at least detect that an operator inadvertently fills the wrong tank with product.

According to a first aspect of the present invention, it is therefore provided a level measurement system as defined by claim 1.

The present invention is based on the realization that a long battery life for a wireless level measurement system can be combined with the desired improved ability to detect operator error in connection with tank filling (partial or full filling, in other words adding product to the tank), by controlling the level measurement system of the tank that is intended to be filled to measure the level of the product in the tank more frequently when tank filling is anticipated. The level measurement system can then operate with a very low energy consumption during time periods when the risk of operator error in connection with tank filling is very low, and operate with a higher energy consumption during the, relatively very short, time periods when the risk of such operator error is elevated, that is, during time periods when tank filling is intended.

It should be noted that the indication of a work order for filling the tank may be explicit or implicit. For instance, a command from the asset management system to increase the measurement frequency from the first measurement frequency to the second measurement frequency may be an implicit indication of a work order for filling the tank.

Furthermore, it should be understood that the indication of a work order for filling the tank may be received directly or indirectly from the asset management system. When the indication of a work order for filling the tank is received indirectly from the asset management system, the asset management system may have sent the work order to a wireless operator device of an operator tasked to fulfill the work order, and the indication of the work order may be directly received, by the level measurement system, from the wireless operator device.

Moreover, the controller of the level measurement system may be configured to control the sensing circuitry to periodically measure the level of the product in the tank with the second measurement frequency immediately upon receipt of the indication of the work order for filling the tank, or with an adequate delay. The timing for controlling the level sensing circuitry to increase the measurement frequency may depend on the type of indication of the work order and/or whether or not the indication is direct or indirect as described above, etc.

Advantageously, the level measurement system may be in an inactive state between level measurement operations. In the inactive state, the level sensing circuitry, at least part of the wireless communication circuitry, and part of the controller may be put to sleep, resulting in a very low power consumption of the level measurement system. When it is time for a scheduled level measurement event, the active part of the controller may wake up the sleeping parts of the level measurement system, control the level sensing circuitry to measure the level of the product, and transmit a signal indicative of the measured level of the product to the asset management system using the wireless communication circuitry. While the wireless communication circuitry of the level measurement system is active, it may also receive data, such as instructions, requests, and/or configuration data from the asset management system. Such data may, for example, encode an instruction to change the configuration of the level measurement system (such as to change the measurement frequency), and/or information about an operator **ID** of the operator (or the wireless operator device of the operator) tasked to fulfill the work order for filling the tank.

The wireless communication circuitry comprises first wireless communication circuitry configured to implement a first communication architecture adapted for relatively long range wireless communication; and second wireless communication circuitry configured to implement a second communication architecture adapted for relatively short range wireless communication, with a shorter range than when the first wireless communication circuitry is used.

The first wireless communication circuitry may require more power for operation than the second wireless communication circuitry. It may therefore be more important to minimize the active time for the first wireless communication circuitry than to minimize the active time for the second wireless communication circuitry. For instance, the first wireless communication circuitry may be active only when activated by (part of) the controller as described above, and the second wireless communication circuitry may always be active, or may be activated in response to receipt of the above-mentioned indication of a work order for filling the tank.

According to embodiments of the level measurement system of the present invention, the controller may be configured to receive the indication of the work order for filling the tank using the first wireless communication circuitry. In these embodiments, due to the relatively long range capabilities of the first wireless communication circuitry, the level measurement system may receive the indication of the work order directly from the asset management system.

According to other embodiments, the controller may be configured to receive the indication of the work order for filling the tank using the second wireless communication circuitry. Due to the relatively short range capabilities of the second wireless communication circuitry, the level measurement system may, in these embodiments, receive the indication of the work order from the asset management system, via a wireless operator device of an operator tasked by the asset management system to fulfill the work order.

For example, the indication of the work order for filling the tank may be a pairing request received from the wireless operator device, or a successful pairing performed as a result of the pairing request may be the indication of the work order.

After having established short range (close range) communication with the wireless operator device, the controller of the level measurement system is configured to transition the level sensing circuitry from an inactive state (such as sleep) to an active state. When the level sensing circuitry has been activated, filling level measurements are performed periodically with the second measurement frequency.

According to various embodiments, furthermore, the controller of the level measurement system may be configured to receive, from the asset management system using the wireless communication circuitry, an indication of a work order for filling a neighboring tank within a predefined distance from the tank; control, after having received the indication of the work order, the level sensing circuitry to periodically measure the level of the product with a fourth measurement frequency, higher than the first measurement frequency; and provide, in response to a detection of an increasing level of product in the tank, a signal indicative thereof. The fourth measurement frequency may be the same as the second measurement frequency, but may also be different.

In these embodiments, the functionality of the level measurement system is expanded to include the ability to provide a timely alert in the event that the operator tasked with the work order for filling a particular tank instead starts to fill another tank nearby, that is provided with the level measurement system according to these embodiments of the present invention. As described above for other embodiments of the level measurement system according to the present invention, such an alert may advantageously be provided to the wireless operator device of the operator tasked to fulfill the work order for the neighboring tank using relatively energy efficient short range communication. The short range communication may take place directly between the level measurement system and the wireless operator device, or via the level measurement system of the neighboring tank.

Alternatively, a wireless operator device of the operator tasked by the asset management system to fulfill the work order and/or the asset management system may receive, from the level measurement system, signals indicative of a sequence of measured levels. If these signals indicate an increasing level, the wireless operator device and/or the asset management system may provide an alert to the operator.

The level sensing circuitry comprised in the level measurement system may advantageously comprise transceiver circuitry configured to generate a transmit signal, transmit the transmit signal, and receive a reflection signal, and sensing processing circuitry configured to determine the level of the product based on a timing relation between the transmit signal and the reflection signal. The transmit signal may, for example be an electromagnetic signal (such as radar or lidar) or an acoustic signal (such as ultrasonic).

### Brief Description of the Drawings

These and other aspects of the present invention will now be described in more detail, with reference to the appended drawings showing embodiments of the invention, wherein:
Fig 1 is a schematic illustration of geographically distributed tanks and an asset management system keeping records of the status of each tank and creating work orders for filling tanks as needed;
Fig 2 schematically shows an exemplary tank with a level measurement system installed;
Fig 3 is a schematic illustration of a level measurement system according to a first embodiment of the present invention;
Fig 4 is a schematic illustration of a level measurement system according to a second embodiment of the present invention;
Fig 5 is an exemplary illustration of an operator tasked with fulfilling a work order at a site with multiple tanks;
Fig 6 schematically shows wireless communication involving the level measurement system of a tank to be filled, an operator device, and the asset management system;
Fig 7A is a first exemplary interaction diagram for interactions involving the level measurement system of the tank to be filled, the operator device, and the asset management system;
Fig 7B is a second exemplary interaction diagram for interactions involving the level measurement system of the tank to be filled, the operator device, and the asset management system;
Fig 8 schematically illustrates measurement operations performed by the level measurement system of the tank to be filled;
Fig 9 schematically shows wireless communication involving the level measurement system of a tank to be filled, the level measurement system of a neighboring tank, an operator device, and the asset management system;
Fig 10 is an exemplary interaction diagram for interactions involving the level measurement system of the tank to be filled, the level measurement system of the neighboring tank, the operator device, and the asset management system;
Fig 11A schematically illustrates measurement operations performed by the level measurement system of the tank to be filled;
Fig 11B schematically illustrates measurement operations performed by the level measurement system of the neighboring tank; and
Fig 12 schematically shows wireless communication involving the level measurement system of a tank to be filled, an operator device, a mobile vessel containing product, and the asset management system.

### Detailed Description of Example Embodiments of the Invention

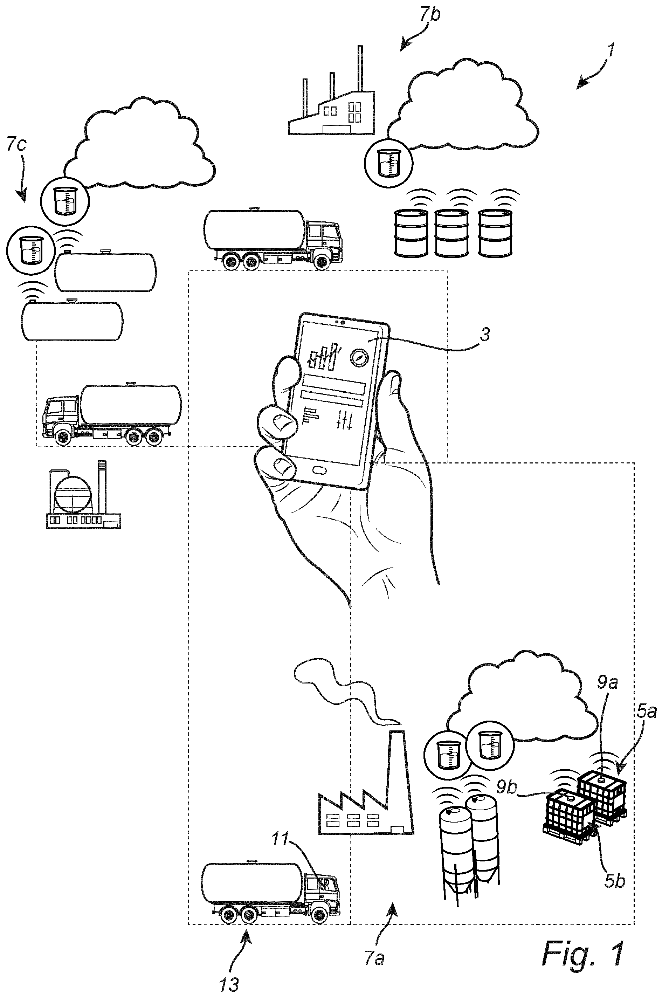

Fig 1 is a schematic illustration of an asset management system 1, and assets that may be managed by the asset management system 1. The asset management system 1 is here embodied in the form of software running on servers (represented by the clouds in fig 1) and on client devices (represented by a mobile device 3 of an asset management system operator in fig 1). Assets are represented by tanks 5a-b (only two of the tanks are provided with reference numerals in fig 1 to avoid cluttering the drawing) grouped at different locations 7a-c. As was mentioned in the Background section, the asset management system 1 may, for example, be used by a product availability provider. To ensure that each tank 5a-b always contains a minimum amount of product, the asset management system 1 may periodically receive an updated measured level of product in each tank 5a-b from a level measurement system 9a-b arranged to measure the level of product in that tank 5a-b. When the updated measured level of product in a tank 5a-b indicates that the tank should soon be refilled, the asset management system 1 may create a work order and provide that work order to an operator 11. The operator 11 may then bring a mobile vessel 13 (such as a tanker truck) with the relevant product to the location 7a-c of the tank 5a-b, and fill the tank 5a-b with the correct product for that tank.

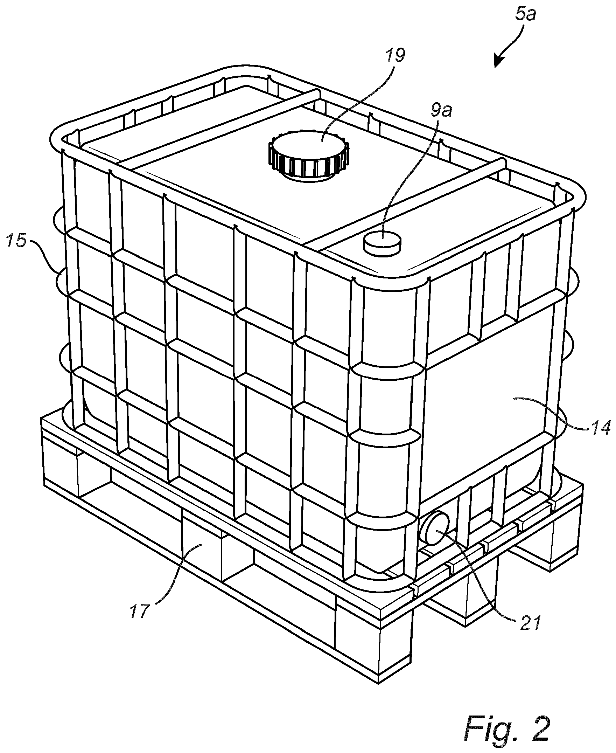

Fig 2 schematically shows an exemplary tank 5a (in this case a so-called IBC-tank) with a level measurement system installed. Referring to fig 2, the IBC-tank 5a comprises a plastic container 14, a metal cage 15, and a pallet 17. The plastic container 14 is provided with a top opening 19 for filling product and a bottom opening 21 for emptying product. As is schematically illustrated in fig 2, the IBC-tank 5a is further provided with the above-mentioned level measurement system 9a that is, in this particular configuration, attached to the IBC-tank 5a for measuring the level of product in the tank through the wall of the plastic container 14.

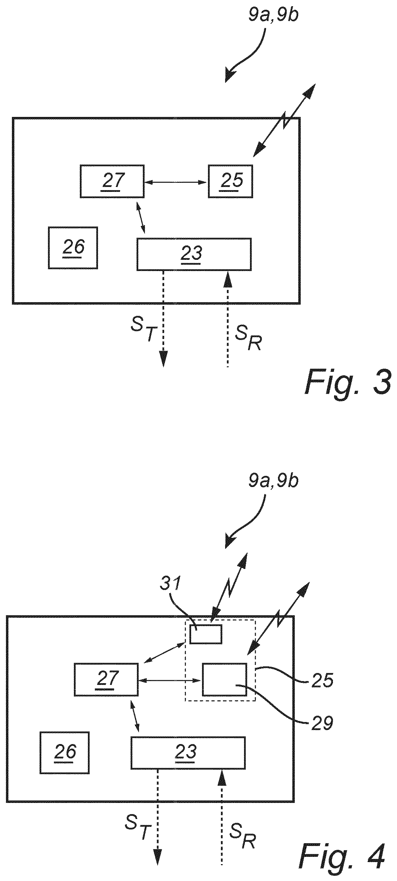

Fig 3 is a schematic illustration of a level measurement system 9a, 9b according to a first embodiment of the present invention. Referring to fig 3, this embodiment of the level measurement system comprises level sensing circuitry 23, wireless communication circuitry 25, and a controller 27. In this first example configuration, the level sensing circuitry 23 may be configured to generate a transmit signal S_{T}, transmit the transmit signal S_{T} towards a surface of the product in the tank 5A-B, and receive a reflection signal S_{R} resulting from reflection of the transmit signal S_{T} at the surface of the product. The level sensing circuitry 23 is further configured to determine the level of the product in the tank 5a-b based on a timing relation between the transmit signal S_{T} and the reflection signal S_{R}.

The controller 27 is coupled to the level sensing circuitry 23 and the wireless communication circuitry 25, and is configured to control the level sensing circuitry 23 to repeatedly measure the level of the product, and to repeatedly transmit signals indicative of the measured level of the product in the tank, using the wireless communication circuitry 25. The controller 27 is also configured to wirelessly receive, from the asset management system 1, an indication of a work order for filling the tank, which has been issued to an operator 11. The controller 27 is further configured to control, after having received the indication of the work order, the level sensing circuitry 23 to more often repeatedly measure the level of the product, and to more often repeatedly transmit signals indicative of the measured level of the product in the tank.

Fig 4 is a schematic illustration of a level measurement system 9a, 9b according to a second embodiment of the present invention. In this second embodiment of the invention, the wireless communication circuitry 25 comprises first wireless communication circuitry 29 configured to implement a first communication architecture adapted for relatively long range wireless communication; and second wireless communication circuitry 31 configured to implement a second communication architecture adapted for relatively short range wireless communication.

The first wireless communication circuitry 29 may thus be capable of wireless communication at a range that is beyond the capabilities of the second wireless communication circuitry 31. On the other hand, the second wireless communication circuitry 31 may require less power than the first communication circuitry, and the use of the second wireless communication circuitry 31 may be free.

The first wireless communication architecture may use at least one gateway for communication with the asset management system 1. Examples of the first wireless communication architecture may include LoRaWAN, Sigfox, Dash7, NB (Narrow Band) - IoT, and GSM etc. The second wireless communication architecture may rely on close range direct wireless communication. One suitable example of the second wireless communication architecture is BLE (Bluetooth Low Energy).

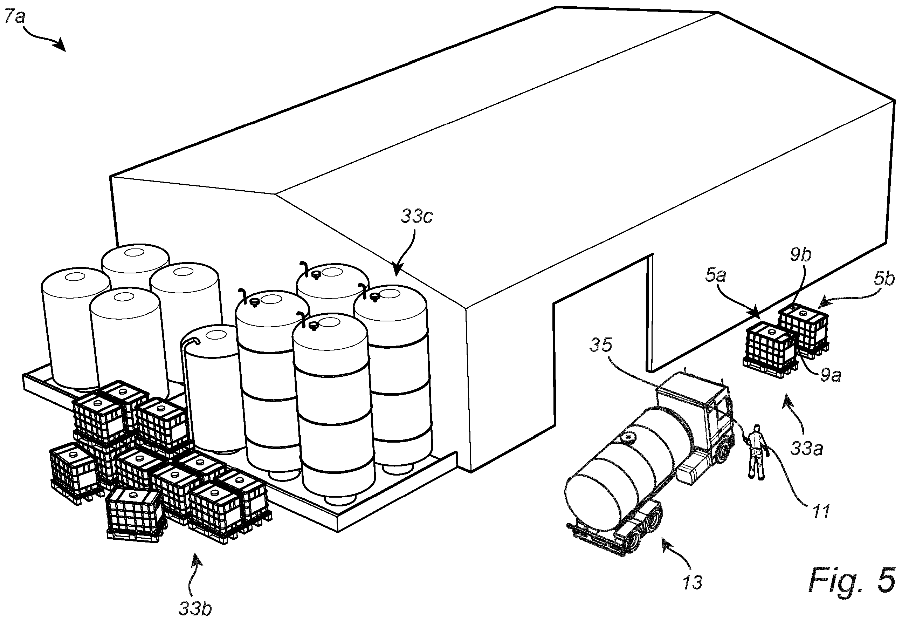

Fig 5 is an exemplary illustration, showing an operator 11 tasked by the asset management system 1 with fulfilling a work order at a site 7a with multiple tanks. At the example site 7a in fig 5, there are two groups 33a-b of IBC-tanks, and one group 33c of fixed storage tanks. In one of the groups 33a, which will be used to illustrate example embodiments of the present invention, there are two tanks 5a-b arranged close to each other. In the illustration of fig 5, the operator 11 has arrived at the site 7a and has stepped out of the mobile vessel 13 (tanker truck). In the operator's hand is a wireless operator device 35.

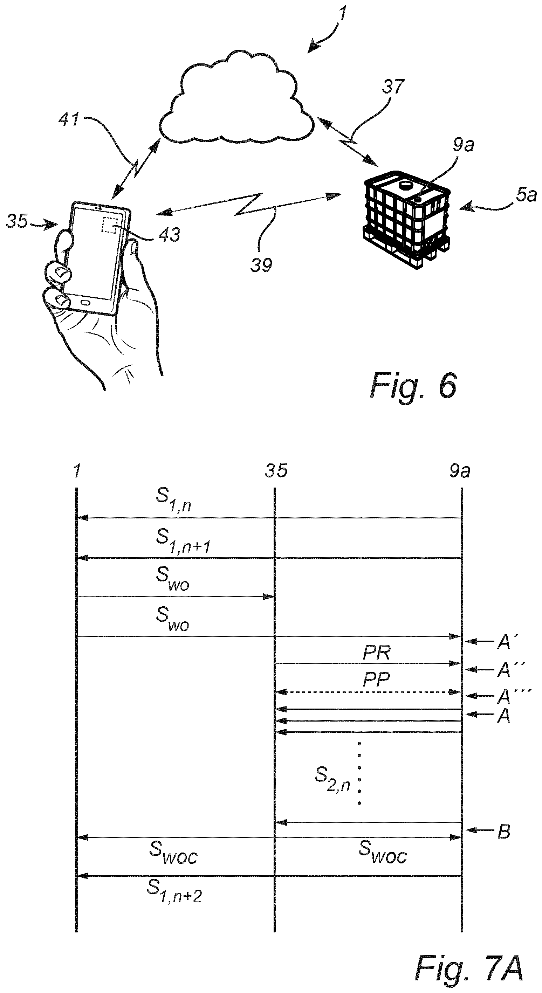

With this illustrative situation in mind, fig 6 schematically shows wireless communication involving the level measurement system 9a of a tank 5a to be filled, an operator device 35, and the asset management system 1. Fig 6 shows long range wireless communication 37 between the first wireless communication circuitry 29 (please see fig 4) of the level measurement system 9a and the asset management system 1, short range wireless communication 39 between the second wireless communication circuitry 31 of the level measurement system 9a and wireless communication circuitry 43 comprised in the wireless operator device 35, and long range wireless communication 41 (typically cellular connection) between the wireless operator device 35 and the asset management system 1.

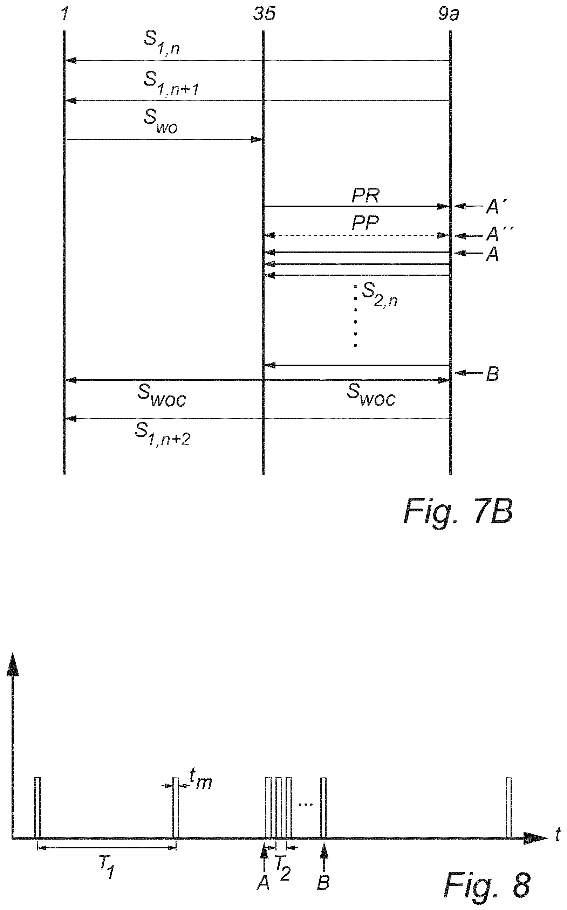

Operation of the level measurement system 9a according to two example embodiments of the present invention will now be described with reference to the exemplary interaction diagrams in figs 7A-B, and the timing diagram for measurement operations in fig 8.

Referring first to fig 7A, and starting from the top of the interaction diagram, signals S1,n; S1,n+1 are transmitted from the level measurement system 9a to the asset management system 1, using the first wireless communication circuitry 29 (see fig 4) in the level measurement system 9a. The signals S1,n; S1,n+1 are indicative of the level of the product, as measured at two different points in time, while the level sensing circuitry 23 of the level measurement system 9a is controlled by the controller 27 to periodically measure the level of the product in the tank 5a with a first measurement frequency. This is schematically illustrated in the left part of the timing diagram in fig 8, where it is indicated that the level sensing circuitry 23 is activated during a measurement time period tm at a first interval T1 (time between consecutive measurements), corresponding to a first, relatively low, measurement frequency. At the end of a measurement time period tm, or after the end of the measurement time period, the controller 27 may activate the first wireless communication circuitry 29 and transmit the above-mentioned signal S1,n indicative of the level of the product. The first interval T1 may be more than one hour, such as one day, in order to save energy while keeping track of the level of product in the tank 5a at the asset management system 1.

Returning to fig 7A, it could be assumed that the level of product in the tank 5a indicated by signal S1,n+1 triggers the creation of a work order at the asset management system 1. For instance, the signal S1,n+1 may indicate a level that is below a predefined threshold level. As is shown in fig 7A, the asset management system 1 may then separately transmit a signal SWO indicating the work order to the wireless operator device 35 and to the level measurement system 9a. In the simplified example of fig 7A, it is assumed that the asset management system 1 sends corresponding indications of the work order to the wireless operator device 35 and to the level measurement system 9a. It should, however, be noted that the asset management may transmit different indications to the wireless operator device 35 and to the level measurement system 9a. For instance, the wireless operator device 35 may be provided with detailed information about the location 7a of the tank 5a to be filled, which product to fill the tank 5a with, and the amount of product. Furthermore, the wireless operator device 35 may be provided with suitable information for secure pairing with the second wireless communication circuitry 31 (see fig 4) comprised in the level measurement system 9a. The level measurement system 9a may be provided with a simpler indication, which may, for example, only contain information that the work order has been created and suitable information for secure pairing with wireless communication circuitry 43 comprised in the wireless operator device 35.

Referring additionally to fig 4, the controller 27 of the level measurement system 9a may control the second wireless communication circuitry 31 to participate in a pairing procedure with the wireless communication circuitry 43 comprised in the wireless operator device 35, to establish communication between the level measurement system 9a and the wireless operator device 35. As is schematically indicated in fig 7A, the level measurement system 9a may receive, using the second measurement circuitry 31, a paring request PR from the wireless operator device 35, resulting in a pairing procedure PP for establishing secure direct wireless connection between the wireless operator device 35 and the level measurement system 9a. Alternatively, the pairing may be initiated by the level measurement system 9a.

At some point in time following receipt of the indication of the work order (in this case the signal SWO), the controller 27 of the level measurement system 9a controls the level sensing circuitry 23 to start to periodically measure the level of the product in the tank 5a with a second measurement frequency, higher than the first measurement frequency represented by the first interval T1. Referring again to fig 8, the timing of the start of the more frequent level measurement regime is indicated by the letter A. In this mode of operation of the level measurement system 9a, the level sensing circuitry 23 is activated during measurement time periods at a second interval T2 (time between consecutive measurements), corresponding to the above-mentioned second, relatively high, measurement frequency. At the end of a measurement time period, or after the end of the measurement time period, the controller 27 may activate the first wireless communication circuitry and transmit signals S2,n indicative of the level of the product. The second interval T2 may be less than one hour, such as one minute or less, in order to be able to detect the start a filling operation, and to track the filling operation with a reasonably low latency.

The start A of the more frequent level measurement regime may substantially coincide with the first transmission of more frequent wireless signals indicative of the measured levels. This is indicated by the letter A in fig 7A. Alternatively, other events may trigger the start of the more frequent level measurement regime. Some such other events are indicated in fig 7A, where A' indicates the time of receipt of the indication of the work order, A" indicates initiation of the pairing procedure, and A‴ indicates successful completion of the pairing procedure.

During measurement of the level of product in the tank 5a with the second measurement frequency (the second interval T2 between consecutive measurement operations), the controller 27 controls the level measurement system 9a to repeatedly transmit signals S2,n indicative of the measured level of the product to the wireless operator device 35, using the second wireless communication circuitry 31. Hereby, the operator 11 can be continuously updated concerning the filling of the tank 5a, without excessive use of energy stored in a battery 26 comprised in the level measurement system 9a. In embodiments, the wireless operator device 35 may relay the signals S2,n and/or other indications of the measured level to the asset management system 1 via the wireless long range communication 41 between the wireless operator device 35 and the asset management system 1.

In the event that the operator 11 inadvertently starts to fill the wrong tank, such as the neighboring tank 5b, or there is some other problem associated with fulfilling the work order, this may be detected by observing that a change in the measured level is smaller than a predefined value. The change may be between consecutive measurements, or following a predefined time period after a predefined starting time, such as the above-mentioned possible starting times A, A', A" or A‴. In embodiments, the controller 27 of the level measurement system 9a may be configured to determine that the level of the product remains unchanged following a predefined time period after initiation of the pairing procedure; and transmit an alert signal to the wireless operator device 35. Alternatively, or in combination, the wireless operator device 35 may be configured to produce an alert for the operator 11 in response to a determination of an unchanged level as described above. The operator 11 will then be able to react to such an alert, for instance by terminating the filling operation, if it has started.

Although not specifically indicated in fig 7A or fig 8, it should be noted that the controller 27 may control the level sensing circuitry 23 to periodically measure the level of the product with a third measurement frequency, which is higher than the second measurement frequency, after it has been determined that the filling operation has started. This will allow more accurate tracking of the level of product in the tank 5a, with less latency, at the cost of a temporarily elevated power consumption. To minimize the time with temporarily elevated power consumption, the controller 27 may, for example, be configured to control the level sensing circuitry 23 to the third measurement frequency when it has been determined, using the second measurement frequency, that a predefined threshold level has been reached, or that the rate of increase in the level of the product is greater than a predefined rate of increase.

That the filling operation has started may be determined by the controller 27 of the level measurement system 9a by evaluating the results of measurement operations. Alternatively, or in combination, the determination may be based on information about the start of the filling operation, received from the wireless operator device 35.

At some point in time, the radar level gauge system 9a returns to measuring the level of product in the tank 5a with the first measurement frequency (the first interval T1 between consecutive measurement operations). This point in time is indicated by the letter B in fig 7A and fig 8. The action to return to measuring the level with the first measurement frequency may be triggered by an indication that the work order has been completed. In fig 7A, such an indication is shown as a signal Swoc wirelessly transmitted from the wireless operator device 35 to the level measurement system 9a, and to the asset management system 1. As is indicated in fig 7A and fig 8, the level measurement system 9a, then starts to again measure the level with the first measurement frequency, and transmit signals S1,n+2 indicative of the level to the asset management system 1.

The controller 27 of the level measurement system 9a may be configured to leave the mode with relatively frequent level measurements (the second measurement frequency) in response to other indications. Such indications may, for example, include a determination that the wireless connection 39 with the wireless operator device 35 has been broken, or that the level of the product in the tank 5a has not changed for a predefined time (or a predefined number of consecutive measurement operations).

As has previously been mentioned, the indication of the work order from the asset management system 1 to the level measurement system 9a need not be received by the level measurement system 9a directly from the asset management system 1, but may be received via the wireless operator device 35, by way of the short range wireless communication 39 between the wireless operator device 35 and the level measurement system 9a. This situation is indicated in the interaction diagram in fig 7B, where the signal SWO indicating the work order sent from the asset management system 1 to the wireless operator device 35 only. In this case, the pairing request PR from the wireless operator device 35 to the level measurement system 9a may constitute the indication of the work order received by the level measurement system 9a.

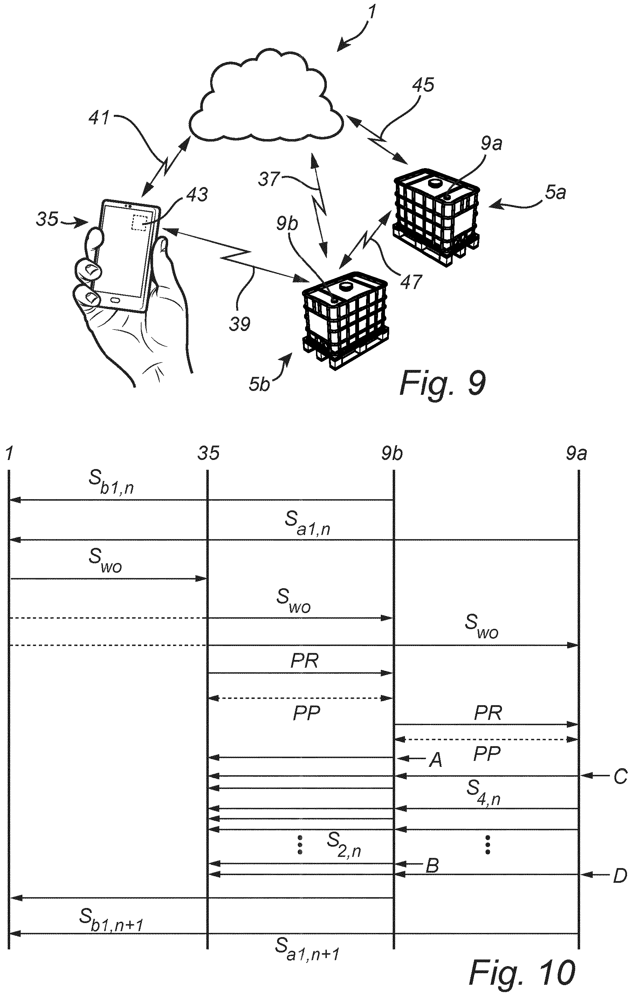

Fig 9 schematically shows wireless communication involving the level measurement system 9b of a tank 5b to be filled, the level measurement system 9a of a neighboring tank 5a, an operator device 35, and the asset management system 1. The tank 5a that was filled in the previously described examples is thus now a neighboring tank, for which no work order for filling has been issued. Fig 9 shows long range wireless communication 37 between the first wireless communication circuitry 29 (please see fig 4) of the level measurement system 9b and the asset management system 1, short range wireless communication 39 between the second wireless communication circuitry 31 of the level measurement system 9b and wireless communication circuitry 43 comprised in the wireless operator device 35, and long range wireless communication 41 (typically cellular connection) between the wireless operator device 35 and the asset management system 1. In addition, fig 9 schematically indicates long range wireless communication 45 between the first wireless communication circuitry 29 of the level measurement system 9a of the neighboring tank 5a, that is within a predefined distance from the tank 5b to be filled, and the asset management system 1. Fig 9 also includes an indication of short range wireless communication 47 between the level measurement system 9b of the tank 5b to be filled and the level measurement system 9a of the neighboring tank 5a.

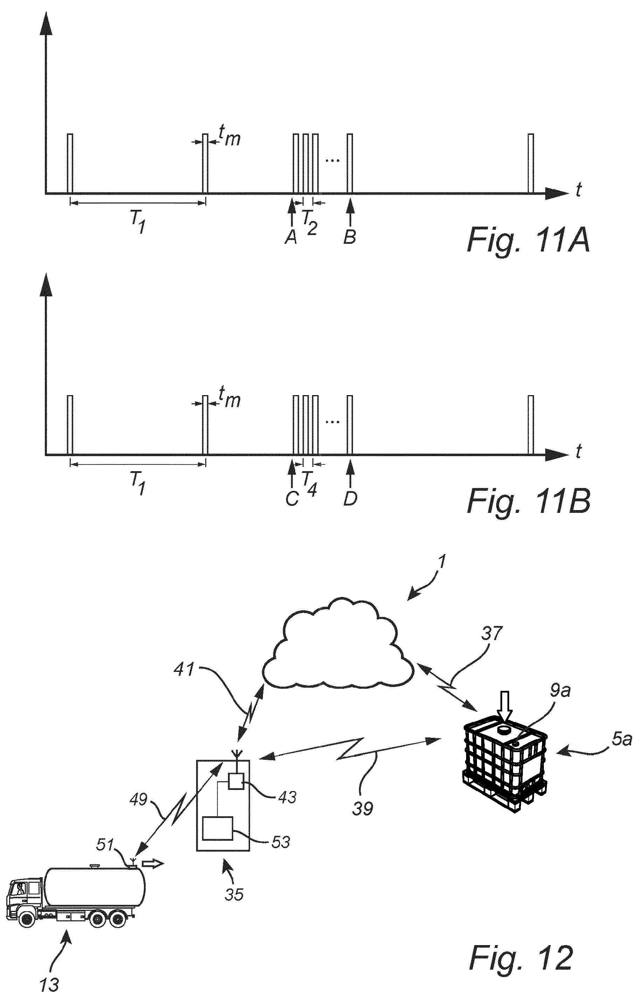

Operation of the level measurement systems 9a and 9b according to example embodiments of the present invention will now be described with reference to the exemplary interaction diagram in fig 10, and the timing diagrams for measurement operations in figs 11A-B.

Referring first to fig 10 and starting from the top of the interaction diagram, a signal Sb1,n is transmitted from the level measurement system 9b of the tank 5b to be filled to the asset management system 1, using the first wireless communication circuitry 29 (see fig 4) of the level measurement system 9b. Similarly, a signal Sa1,n is transmitted from the level measurement system 9a of the neighboring tank 5a. The signal Sb1,n from the tank to be filled 5b and the signal Sa1,n from the neighboring tank 5a are indicative of the levels of the product(s) in the two tanks, respectively. As was described above with reference to figs 7A-B and fig 8, the levels of the product(s) in the two tanks 5a-b are currently periodically measured with a first measurement frequency. This is schematically illustrated in the left part of the timing diagram in each of figs 11A-B, where it is indicated that the level sensing circuitry 23 is activated during a measurement time period tm at a first interval T1 (time between consecutive measurements), corresponding to a first, relatively low, measurement frequency. Fig 11A schematically illustrates the measurement operations for the tank 5b to be filled, as was described above with reference to figs 7A-B and fig 8. Fig 11B schematically illustrates the measurement operations for the neighboring tank 5a. For the sake of conciseness, the description below will focus on operations performed by the level measurement system 9a of the tank 5a that is in the vicinity of the tank 5b that is to be filled.

Returning to fig 10, the asset management system 1 transmits, as was described above with reference to figs 7A-B a signal SWO indicating the work order to the wireless operator device 35 and to the level measurement system 9b of the tank 5b to be filled. As was mentioned above with reference to figs 7A-B, the signal indicating the work order received by the level measurement system 9b may be received directly or indirectly from the asset management system 1. In fig 10, this is indicated by the dotted portion of the arrow between the asset management system and the level measurement system 9b of the tank 5b to be filled.

As is also indicated in fig 10, the controller of the level measurement system 9a of the neighboring tank 5a receives from the asset management system 1, directly or indirectly, an indication, here also denoted by the signal SWO, of the work order for the filling of the tank 5b to be filled. It should be pointed out that the indications (signals) provided from the asset management system 1 to the wireless operator device 35, and the respective level measurement systems 9a-b may be identical or different.

As was described above, the level measurement system 9b of the tank to be filled may pair with the wireless operator device 35, to establish communication between the level measurement system 9b and the wireless operator device 35. In a similar fashion, the level measurement system 9a of the neighboring tank 5a may be paired with the wireless operator device 35, or - as is indicated in fig 9 and fig 10 - with the level measurement system 9b of the tank 5b to be filled.

Focusing now on the operation of the level measurement system 9a of the neighboring tank 5a, at some point in time following receipt of the indication of the work order for filling the tank 5b to be filled (in this case the signal SWO), the controller 27 of the level measurement system 9a controls the level sensing circuitry 23 to start to periodically measure the level of the product in the neighboring tank 5a with a fourth measurement frequency, higher than the first measurement frequency represented by the first interval T1. Referring again to fig 10B, the timing of the start of the more frequent level measurement regime is indicated by the letter C. In this mode of operation of the level measurement system 9a, the level sensing circuitry 23 is activated during measurement time periods at a fourth interval T4 (time between consecutive measurements), corresponding to the above-mentioned fourth, relatively high, measurement frequency. At the end of a measurement time period, or after the end of the measurement time period, the controller 27 may activate the first wireless communication circuitry and transmit signals S4,n indicative of the level of product in the neighboring tank. The fourth interval T4 may be less than one hour, such as one minute or less, in order to be able to detect the start of a filling operation. The fourth measurement frequency may be substantially identical to the second measurement frequency. The signals S4,n indicative of the level of product in the neighboring tank 5a may be transmitted directly to the wireless operator device 35 or - as is indicated in fig 10 - to the wireless operator device 35 via the level measurement system 9b of the tank 5b to be filled.

Through the more frequent measurement of the level of product in the neighboring tank 5a, triggered by the indication of the work order to fill the tank 5b to be filled, it can promptly be detected if the operator 10 should start to fill the wrong tank (the neighboring tank 5a).

If signals indicative of the level of product in the neighboring tank 5a are transmitted to the wireless operator device 35 as is indicated in fig 10, the wireless operator device 35 may detect an increasing level of product in the neighboring tank, and provide a signal indicative thereof - such as an operator alert signal - in response to the detected increasing level. Alternatively, the controller 27 of the level measurement system 9a of the neighboring tank 5a may be configured to analyze the results of the measurement operations, and only transmit a signal to the wireless operator device 35 when the measurement operations indicate an increasing level of product in the tank.

As was described above with reference to figs 7A-B and fig 8, the level measurement system 9b of the tank 5b to be filled may return to measuring with the first measurement frequency at, for example, the time indicated by the letter B in fig 10 and fig 11A. Similarly, the level measurement system 9a of the neighboring tank 5a may return to measuring with the first measurement frequency at, for example, the time indicated by the letter D in fig 10 and fig 11B. As is indicated in fig 10 and figs 11A-B, the level measurement system 9b of the tank that was filled 5b and the level measurement system 9a of the neighboring tank then start to again measure the levels in the respective tanks 5a-b with the first measurement frequency, and transmit signals Sa1,n+1 and Sb1,n+1 to the asset management system 1.

Fig 12 schematically shows wireless communication involving the level measurement system 9a of a tank 5a to be filled, a wireless operator device 35, a mobile vessel 13 containing product, and the asset management system 1. Fig 12 shows long range wireless communication 37 between the first wireless communication circuitry 29 (please see fig 4) of the level measurement system 9a and the asset management system 1, short range wireless communication 39 between the second wireless communication circuitry 31 of the level measurement system 9a and wireless communication circuitry 43 comprised in the wireless operator device 35, and long range wireless communication 41 (typically cellular connection) between the wireless operator device 35 and the asset management system 1. In addition, fig 12 schematically indicates short range wireless communication 49 between the wireless operator device 35 and equipment 51 arranged and configured to indicate an amount of product removed from the mobile vessel 13 containing product intended to be used for filling the tank 5a. The equipment 51, which may for example include a pump and/or a filling level indicator for the mobile vessel 13, is schematically indicated in fig 12 as being arranged on the mobile vessel 13. It should be noted that such equipment may alternatively be arranged on the tank 5a to be filled, or somewhere between the mobile vessel 13 and the tank 5a to be filled. The block arrows in fig 12 indicate removal of product from the mobile vessel 13 and addition of product to the tank 5a, respectively.

As is also indicated in fig 12, the wireless operator device 35 may include a device controller 53, in addition to the above-mentioned wireless communication circuitry 43. The device controller 53 may be configured to control the wireless communication circuitry 43 of the wireless operator device 35 to participate in a pairing procedure with the second wireless communication circuitry 31 comprised in the level measurement system 9a (see fig 4). Further, the device controller 53 may be configured to determine that there is a discrepancy between an increase in an amount of product in the tank 5a to be filled and the amount of product removed from the mobile vessel 13; and provide an operator alert. This will help the operator to quickly understand that the wrong tank is being filled, or that there is some other problem with the filling operation.

The person skilled in the art realizes that the present invention by no means is limited to the preferred embodiments described above. On the contrary, many modifications and variations are possible within the scope of the appended claims.

## Claims

1. A level measurement system (9a-b), for measuring the level of a product in a tank (5a-b) being monitored by an asset management system (1), the level measurement system (9a-b) comprising:
level sensing circuitry (23) for measuring the level of the product;
wireless communication circuitry (25) for wireless communication, comprising first wireless communication circuitry (29) configured to implement a first communication architecture adapted for relatively long range wireless communication; and second wireless communication circuitry (31) configured to implement a second communication architecture adapted for relatively short range wireless communication; and
a controller (27) for controlling operation of the level measurement system (23), the controller (27) being configured to:
control the level sensing circuitry (23) to periodically measure the level of the product with a first measurement frequency;
transmit, while the level sensing circuitry (23) is controlled to periodically measure the level of the product with the first measurement frequency, signals indicative of the measured level of the product, using the first wireless communication circuity (29);
receive, from the asset management system (1) using the wireless communication circuitry (25), an indication of a work order for filling the tank (5a-b);
control the second wireless communication circuitry (31) to participate in a pairing procedure with wireless communication circuitry (43) comprised in a wireless operator device (35) of an operator (11) tasked by the asset management system to fulfill the work order, to establish communication between the level measurement system (9a-b) and the wireless operator device (35);
transition the level sensing circuitry (23) from an inactive state to an active state;
control the sensing circuitry (23) to periodically measure the level of the product with a second measurement frequency, higher than the first measurement frequency, after initiation of the pairing procedure; and
transmit, while the level sensing circuitry (23) is controlled to periodically measure the level of the product with the second measurement frequency, to the wireless operator device (35) using the second wireless communication circuitry (31), signals indicative of the measured level of the product.

2. The level measurement system according to claim 2, wherein the controller is configured to:
receive the indication of the work order for filling the tank using the first wireless communication circuitry.

3. The level measurement system (9a-b) according to claim 1 or 2, wherein the controller (27) is configured to:
determine that the level of the product remains unchanged following a predefined time period after initiation of the pairing procedure; and
transmit an alert signal to the wireless operator device (35).

4. The level measurement system (9a-b) according to any one of the preceding claims, wherein the controller (27) is configured to:
control the sensing circuitry (23) to periodically measure the level of the product with the second measurement frequency;
determine that a filling operation has started; and
control the level sensing circuitry (23) to periodically measure the level of the product with a third measurement frequency, higher than the second measurement frequency.

5. The level measurement system (9a-b) according to claim 4, wherein the controller (27) is configured to control the level sensing circuitry (23) to start to periodically measure the level of the product with the third measurement frequency following a determination that the level of the product is higher than a predefined threshold level or that the level of the product is increasing with a rate of increase being higher than a predefined threshold rate of increase.

6. The level measurement system (9a-b) according to any one of the preceding claims, wherein the controller (27) is configured to control the level sensing circuitry (23) to go back to periodically measuring the level of the product with the first measurement frequency in response to an indication that the work order has been completed.

7. The level measurement system (9a-b) according to any one of the preceding claims, wherein the controller (27) is configured to control the level sensing circuitry (23) to go back to periodically measuring the level of the product with the first measurement frequency following passage of a predefined time from a point in time when the level sensing circuitry (23) started to measure the level of the product with the second measurement frequency.

8. The level measurement system (9a-b) according to any one of the preceding claims, wherein the controller (27) is configured to:
receive, from the asset management system (1) using the wireless communication circuitry (25), an indication of a work order for filling a neighboring tank (5b) within a predefined distance from the tank (5a); and
control, after having received the indication of the work order, the level sensing circuitry to periodically measure the level of the product with a fourth measurement frequency, higher than the first measurement frequency.

## Patentansprüche

1. Füllstandsmesssystem (9a-b) zum Messen des Füllstands eines Produkts in einem Tank (5a-b), der von einem Anlagenverwaltungssystem (1) überwacht wird, wobei das Füllstandsmesssystem (9a-b) umfasst:
eine Füllstandserfassungs-Schaltungsanordnung (23) zum Messen des Füllstands des Produkts;
eine Drahtloskommunikations-Schaltungsanordnung (25) zur Drahtloskommunikation, umfassend eine erste Drahtloskommunikations-Schaltungsanordnung (29), die eingerichtet ist, um eine erste Kommunikationsarchitektur zu implementieren, die für eine Drahtloskommunikation mit relativ großer Reichweite ausgelegt ist; und eine zweite Drahtloskommunikations-Schaltungsanordnung (31), die eingerichtet ist, um eine zweite Kommunikationsarchitektur zu implementieren, die für eine Drahtloskommunikation mit relativ kleiner Reichweite ausgelegt ist; und
eine Steuerung (27) zum Steuern eines Betriebs des Füllstandsmesssystems (23), wobei die Steuerung (27) eingerichtet ist zum:
Steuern der Füllstandserfassungs-Schaltungsanordnung (23), um den Füllstand des Produkts periodisch mit einer ersten Messfrequenz zu messen;
Senden, während die Füllstandserfassungs-Schaltungsanordnung (23) gesteuert wird, um den Füllstand des Produkts periodisch mit der ersten Messfrequenz zu messen, von Signalen, die den gemessenen Füllstand des Produkts angeben, unter Verwendung der ersten Drahtloskommunikations-Schaltungsanordnung (29);
Empfangen einer Arbeitsanweisung zum Befüllen des Tanks (5a-b) von dem Anlagenverwaltungssystem (1) unter Verwendung der Drahtloskommunikations-Schaltungsanordnung (25);
Steuern der zweiten Drahtloskommunikations-Schaltungsanordnung (31), um an einem Kopplungsvorgang mit einer Drahtloskommunikations-Schaltungsanordnung (43) teilzunehmen, die in einem Drahtlosbetriebsgerät (35) eines Betreibers (11) enthalten ist, der von dem Anlagenverwaltungssystem beauftragt wurde, die Arbeitsanweisung auszuführen, um eine Kommunikation zwischen dem Füllstandsmesssystem (9a-b) und dem Drahtlosbediengerät (35) herzustellen;
Überführen der Füllstandserfassungs-Schaltungsanordnung (23) von einem inaktiven Zustand in einen aktiven Zustand;
Steuern der Erfassungs-Schaltungsanordnung (23) nach Beginn des Kopplungsvorgangs, um den Füllstand des Produkts periodisch mit einer zweiten Messfrequenz zu messen, die höher ist als die erste Messfrequenz; und
Senden, während die Füllstandserfassungs-Schaltungsanordnung (23) gesteuert wird, um den Füllstand des Produkts periodisch mit der zweiten Messfrequenz zu messen, von Signalen, die den gemessenen Füllstand des Produkts angeben, an das Drahtlosbediengerät (35) unter Verwendung der zweiten Drahtloskommunikations-Schaltungsanordnung (31).

2. Füllstandsmesssystem nach Anspruch 1, wobei die Steuerung eingerichtet ist zum:
Empfangen der Arbeitsanweisung zum Befüllen des Tanks unter Verwendung der ersten Drahtloskommunikations-Schaltungsanordnung.

3. Füllstandsmesssystem (9a-b) nach Anspruch 1 oder 2, wobei die Steuerung (27) eingerichtet ist zum:
Bestimmen, dass der Füllstand des Produkts nach einer vordefinierten Zeitspanne nach Beginn des Kopplungsvorgangs unverändert bleibt; und
Senden eines Warnsignals an das Drahtlosbediengerät (35).

4. Füllstandsmesssystem (9a-b) nach einem der vorhergehenden Ansprüche, wobei die Steuerung (27) eingerichtet ist zum:
Steuern der Erfassungs-Schaltungsanordnung (23), um den Füllstand des Produkts periodisch mit der zweiten Messfrequenz zu messen;
Bestimmen, dass ein Befüllungsvorgang begonnen hat; und
Steuern der Füllstandserfassungs-Schaltungsanordnung (23), um den Füllstand des Produkts periodisch mit einer dritten Messfrequenz zu messen, die höher ist als die zweite Messfrequenz.

5. Füllstandsmesssystem (9a-b) nach Anspruch 4, wobei die Steuerung (27) eingerichtet ist, um die Füllstandserfassungs-Schaltungsanordnung (23) zu steuern, damit diese nach der Bestimmung, dass der Füllstand des Produkts höher als ein vordefinierter Schwellenfüllstand ist oder dass der Füllstand des Produkts mit einer Anstiegsrate ansteigt, die höher als eine vordefinierte Schwellenanstiegsrate ist, damit beginnt, den Füllstand des Produkts periodisch mit der dritten Messfrequenz zu messen.

6. Füllstandsmesssystem (9a-b) nach einem der vorhergehenden Ansprüche, wobei die Steuerung (27) eingerichtet ist, um die Füllstandserfassungs-Schaltungsanordnung (23) zu steuern, damit sie als Reaktion auf eine Angabe, dass der Arbeitsauftrag abgeschlossen ist, wieder dazu übergeht, den Füllstand des Produkts periodisch mit der ersten Messfrequenz zu messen.

7. Füllstandsmesssystem (9a-b) nach einem der vorhergehenden Ansprüche, wobei die Steuerung (27) eingerichtet ist, um die Füllstandserfassungs-Schaltungsanordnung (23) zu steuern, damit sie nach Ablauf einer vordefinierten Zeitspanne ab einem Zeitpunkt, zu dem die Füllstandserfassungs-Schaltungsanordnung (23) begonnen hat, den Füllstand des Produkts mit der zweiten Messfrequenz zu messen, wieder dazu übergeht, den Füllstand des Produkts periodisch mit der ersten Messfrequenz zu messen.

8. Füllstandsmesssystem (9a-b) nach einem der vorhergehenden Ansprüche, wobei die Steuerung (27) eingerichtet ist zum:
Empfangen einer Arbeitsanweisung zum Befüllen eines benachbarten Tanks (5b) innerhalb einer vordefinierten Entfernung von dem Tank (5a) von dem Anlagenverwaltungssystem (1) unter Verwendung der Drahtloskommunikations-Schaltungsanordnung (25); und
Steuern, nachdem die Arbeitsanweisung empfangen wurde, der Füllstandserfassungs-Schaltungsanordnung, um den Füllstand des Produkts periodisch mit einer vierten Messfrequenz zu messen, die höher ist als die erste Messfrequenz.

## Revendications

1. Système de mesure de niveau (9a-b) destiné à mesurer le niveau d'un produit dans un réservoir (5a-b) surveillé par un système de gestion d'actifs (1), le système de mesure de niveau (9a-b) comprenant :
un circuit de détection de niveau (23) destiné à mesurer le niveau du produit ;
un circuit de communication sans fil (25) destiné à la communication sans fil, comprenant un premier circuit de communication sans fil (29) configuré pour mettre en œuvre une première architecture de communication adaptée à une communication sans fil de portée relativement longue ; et un deuxième circuit de communication sans fil (31) configuré pour mettre en œuvre une deuxième architecture de communication adaptée à une communication sans fil de portée relativement courte ; et
un dispositif de commande (27) destiné à commander le fonctionnement du système de mesure de niveau (23), le dispositif de commande (27) étant configuré pour :
commander le circuit de détection de niveau (23) pour mesurer périodiquement le niveau du produit selon une première fréquence de mesure ;
transmettre, tandis que le circuit de détection de niveau (23) est commandé pour mesurer le niveau du produit selon la première fréquence de mesure, des signaux indiquant le niveau du produit mesuré, à l'aide du premier circuit de communication sans fil (29) ;
recevoir, à partir du système de gestion d'actifs (1) à l'aide du circuit de communication sans fil (25), une indication relative à un ordre de travail pour le remplissage du réservoir (5a-b) ;
commander le deuxième circuit de communication sans fil (31) pour participer à une procédure d'appariement avec un circuit de communication sans fil (43) compris dans un dispositif d'opérateur sans fil (35) d'un opérateur (11) chargé d'exécuter l'ordre de travail par le système de gestion d'actifs, afin d'établir une communication entre le système de mesure de niveau (9a-b) et le dispositif d'opérateur sans fil (35) ;
faire passer le circuit de détection de niveau (23) d'un état inactif à un état actif ;
commander le circuit de détection (23) pour mesurer périodiquement le niveau du produit selon une deuxième fréquence de mesure plus élevée que la première fréquence de mesure, après l'initiation de la procédure d'appariement ; et
transmettre, tandis que le circuit de détection de niveau (23) est commandé pour mesurer périodiquement le niveau du produit selon la deuxième fréquence de mesure, des signaux indiquant le niveau du produit mesuré au dispositif d'opérateur sans fil (35) à l'aide du deuxième circuit de communication sans fil (31).

2. Système de mesure de niveau selon la revendication 1, dans lequel le dispositif de commande est configuré pour :
recevoir l'indication de l'ordre de travail pour le remplissage du réservoir à l'aide du premier circuit de communication sans fil.

3. Système de mesure de niveau (9a-b) selon la revendication 1 ou 2, dans lequel le dispositif de commande (27) est configuré pour :
déterminer que le niveau du produit demeure inchangé à l'issue d'une période de temps prédéfinie après l'initiation de la procédure d'appariement ; et
transmettre un signal d'alerte au dispositif d'opérateur sans fil (35).

4. Système de mesure de niveau (9a-b) selon l'une quelconque des revendications précédentes, dans lequel le dispositif de commande (27) est configuré pour :
commander le circuit de détection (23) pour mesurer périodiquement le niveau du produit selon la deuxième fréquence de mesure ;
déterminer qu'une opération de remplissage a commencé ; et
commander le circuit de détection de niveau (23) pour mesurer périodiquement le niveau du produit selon une troisième fréquence de mesure plus élevée que la deuxième fréquence de mesure.

5. Système de mesure de niveau (9a-b) selon la revendication 4, dans lequel le dispositif de commande (27) est configuré pour commander le circuit de détection de niveau (23) afin de commencer à mesurer périodiquement le niveau du produit selon la troisième fréquence de mesure à la suite d'une détermination selon l'invention laquelle le niveau du produit est supérieur à un niveau seuil prédéfini ou selon laquelle le niveau du produit augmente à une vitesse d'augmentation supérieure à une vitesse d'augmentation seuil prédéfinie.

6. Système de mesure de niveau (9a-b) selon l'une quelconque des revendications précédentes, dans lequel le dispositif de commande (27) est configuré pour commander le circuit de détection de niveau (23) afin de revenir à une mesure périodique du niveau du produit selon la première fréquence de mesure en réponse à une indication que l'ordre de travail a été exécuté.

7. Système de mesure de niveau (9a-b) selon l'une quelconque des revendications précédentes, dans lequel le dispositif de commande (27) est configuré pour commander le circuit de détection de niveau (23) afin de revenir à une mesure périodique du niveau du produit selon la première fréquence de mesure après écoulement d'un temps prédéfini à partir d'un moment où le circuit de détection de niveau (23) a commencé à mesurer le niveau du produit selon la deuxième fréquence de mesure.

8. Système de mesure de niveau (9a-b) selon l'une quelconque des revendications précédentes, dans lequel le dispositif de commande (27) est configuré pour :
recevoir, à partir du système de gestion d'actifs (1) à l'aide du circuit de communication sans fil (25), une indication d'un ordre de travail pour le remplissage d'un réservoir voisin (5b) situé à une distance prédéfinie du réservoir (5a) ; et
commander, après réception de l'indication de l'ordre de travail, le niveau du circuit de détection pour mesurer périodiquement le niveau du produit selon une quatrième fréquence de mesure plus élevée que la première fréquence de mesure.
